# EUROPÄISCHE PATENTSCHRIFT

(11) **EP 3 125 384 B1**
(45) Veröffentlichungstag und Bekanntmachung des Hinweises auf die Patenterteilung: **26.02.2020**
(21) Anmeldenummer: 16181361.3
(22) Anmeldetag: 27.07.2016
(51) Int. Cl.: H02G 3/12

(54) **INSTALLATIONSDOSE**
INSTALLATION BOX
BOITIER D'INSTALLATION

(30) Priorität: 29.07.2015 DE 102015112420
(43) Veröffentlichungstag der Anmeldung: 01.02.2017
(73) Patentinhaber: Kaiser GmbH & Co. KG, 58579 Schalksmühle (DE)
(72) Erfinder:
(74) Vertreter: Köchling, Conrad-Joachim

(56) Entgegenhaltungen:
- EP-A1- 0 602 445
- EP-A1- 0 971 467
- EP-A1- 1 303 017
- EP-A1- 1 850 435
- EP-A2- 2 056 418
- EP-A2- 2 273 637
- WO-A1-96/14682
- DE-A1- 4 101 979
- DE-A1- 4 342 512
- DE-A1- 19 848 475
- FR-A1- 2 339 318
- FR-A1- 2 881 286
- US-B1- 7 586 039

## Beschreibung

Die Erfindung betrifft eine Installationsdose aus Kunststoff für elektrotechnische Zwecke, zumindest aufweisend einen topfartigen Dosenkörper mit einem Boden und eine vom Boden abragende umlaufende Wandung, zudem aufweisend Mittel zur Befestigung an oder in einer Lochung einer Gebäudewand oder einer Gebäudehohlwand, wobei die umlaufende Wandung parallel zur Mittellängsachse des Dosenkörpers über einen Teil ihrer Länge verlaufende Schlitze aufweist, gemäß Oberbegriff des Anspruches 1.

Derartige Installationsdosen aus Kunststoff sind im Stand der Technik vielfach bekannt. Üblicherweise handelt es sich bei solchen Installationsdosen um zylindrische Dosen mit einem Boden. Der Boden der Installationsdosen ist dabei häufig mittels einer zwischen Boden und der Seitenwand der Installationsdose angeordneten Abschrägung angeordnet. Im Bereich dieser Abschrägung und/oder in dem Boden der Installationsdose sind zur erleichterten Zuführung und wieder Abführung beispielsweise von Kabeln ausbrechbare oder durchstoßbare Öffnungen ausgebildet.

Zudem ist es bei solchen Installationsdosen auch üblich, innen an einer Wandung Befestigungsmittel wie beispielsweise Schraubdome mit darin eingeschraubten Schrauben anzuordnen, mittels derer in die Dose eingesetzte Geräte oder Abdeckungen an oder in der Installationsdose befestigbar sind.

Nach dem Einsetzen in eine entsprechende Lochung einer Gebäudewand oder einer Gebäudehohlwand verspreizen bei einer im Stand der Technik bekannten Lösung an Schrauben geführte Spreizmittel und greifen hinter die Lochung der Hohlwand, um mittels der Schrauben hinter der Gebäudehohlwand angezogen werden zu können und die Dose in ihrer in die Lochung eingesetzten Lage zu fixieren.

Somit ist es zur Montage insbesondere an einer Gebäudehohlwand vor Ort nötig, zuerst die Installationsdose in die Lochung der Gebäudehohlwand einzusetzen und anschließend die üblicherweise durch zwei Schrauben betätigten Spreizmittel zuerst zu verspreizen und anschließend gegen die Hohlwand anzuziehen und zu verspannen. Hierzu ist ein nicht unerheblicher Zeitaufwand nötig.

Des Weiteren sind im Stand der Technik bekannte Installationsdosen häufig derart lang ausgebildet, dass sie nicht in allen Gebäudehohlwänden Verwendung finden können, da ihre Länge zu groß ist, sodass sie nicht bündig mit der Wand abschließend in die Lochung eingesetzt werden können. Hierzu muss gegebenenfalls der Monteur vor Ort Installationsdosen mit verschiedenen Längen mitführen und bevorraten.

Aus der DE 41 01 979 A1 ist eine elektrische Hohlwanddose bekannt, die im Dosenmantel einander gegenüberliegend Führungen für federnde Halteglieder aufweist, die in einer Montagesolllage mittels Zähnen an einer umgebenden Begrenzungswand anliegen und die Lagesicherung herbeiführen sollen.

Eine ähnliche Ausgestaltung ist aus der EP 0 971 467 A1 bekannt, bei der im Mantel einer entsprechenden Installationsdose Nuten mit darin befindlichen Klemmteilen vorgesehen sind. Mittels der Klemmteile kann die Dose in der Lochlaibung einer Lochung einer Wandung befestigt werden. Eine ähnliche Lösung ist aus der EP 1 850 435 A1 bekannt, bei der auch wiederum in Nuten der Dosenwandung verschieblich angeordnete Rast- und Klemmelemente angeordnet sind. Weitere ähnliche Lösungen sind aus der EP 1 303 017 A1, der WO 96/14682 A1 und der EP 2 056 418 A2 bekannt.

Aus der FR 2 881 286 A1 ist eine gattungsgemäße Installationsdose bekannt.

Bei dieser Dose ist es möglich, die Dose an zwei unterschiedliche Durchmesser der bauseitigen Einsatzöffnung für die Dose anzupassen.

Ein Werkzeug zur Montage/Demontage einer Installationsdose offenbart die DE 198 48 475 A1.

Aufgrund des Eingangs genannten Standes der Technik liegt der vorliegenden Erfindung die Aufgabe zugrunde, eine Installationsdose der eingangs genannten Art derart zu verbessern, dass diese auf besonders schnelle und einfache Art und Weise in der Lochung einer Hohlwand platziert und lagesicher befestigt werden kann.

Zur Lösung der Aufgabe schlägt die Erfindung vor, dass in beiden dem Schlitz benachbarten Bereichen die umlaufende Wandung der Installationsdose verjüngt ist und angrenzend an den jeweiligen verjüngten Bereich jeweils eine nutartige Führung ausgebildet ist, in der je eine Längsseite eines keilförmigen Materialstreifens, welcher das Spreizmittel bildet, führbar oder geführt ist, und dass der keilförmige Materialstreifen im Bereich seines in Einbaurichtung vorderen, dem Boden angenäherten, Endes innenseitig oder außenseitig an die umlaufende Wandung mittels eines Filmscharniers angeformt ist.

Mittels einer derart ausgebildeten Installationsdose kann diese in einem ersten Schritt vom Monteur vor Ort in die entsprechende Lochung in der Gebäudewand oder Gebäudehohlwand eingesetzt und vorpositioniert werden. In einem nächsten Schritt werden vom Monteur die den Schlitz überdeckenden Spreizmittel aus ihrer Vormontagelage in eine Spreizlage verbracht, in der die Spreizmittel die umlaufende Wandung der Installationsdose im Bereich des jeweiligen Schlitzes aufspreizen und somit die umlaufende Wandung gegen die Lochlaibung anspannen und diese in der angespannten Lage angedrückt halten. Das Verspannen gegen die Lochlaibung und somit Befestigen an oder in der Lochung einer Gebäudewand oder Gebäudehohlwand erfolgt somit auf besonders schnelle Art und Weise, da keinerlei Schrauben zeitaufwendig verschraubt und keine Spreiz- oder Anzugsmittel gegebenenfalls die Wand hintergreifend angezogen werden müssen. Dies bewirkt für den Monteur vor Ort eine erhebliche Zeitersparnis gegenüber herkömmlichen Installationsdosen, sodass insbesondere bei der Montage einer großen Anzahl von Installationsdosen viel Zeit eingespart werden kann.

Hierbei ist das Spreizmittel durch einen flachen, keilförmigen Materialstreifen gebildet, der entlang seiner Längsseiten in angrenzenden Bereichen der umlaufenden Wandung längsgeführt ist und aus einer spannungslosen Vormontagelage in die die umlaufende Wandung an die Lochlaibung anspannende Spreizlage verstellbar ist. Dabei ist die Keilform bevorzugt so ausgerichtet, dass die flachere Spitze dem Boden der Installationsdose zugewandt ist und das breitere Ende des Keils in der Vormontagelage die Mündung der Installationsdose überragt. In der gegen die Lochlaibung verspannten Gebrauchslage ist die Keilspitze dem Boden der Installationsdose weiter angenähert und das breitere Keilende schließt bündig mit dem Mündungsrand der Installationsdose ab. Alternativ kann die Keilform auch so ausgerichtet sein, dass die flachere Spitze die Mündung der Installationsdose überragt und das breitere Ende des Keils in der Vormontagelage nahe dem Boden der Installationsdose angeordnet ist. Hierbei wird zur Verspannung gegen die Lochlaibung die Keilspitze weiter aus der Installationsdose herausgezogen. Dabei verspreizt das breitere Keilende die dem Schlitz benachbarten Bereiche der umlaufenden Wandung und verpresst diese gegen die Lochlaibung, sodass die Installationsdose gegen die Lochlaibung der Gebäudewand oder Gebäudehohlwand verspannt, gehalten ist.

Die die Mündungsebene nach außen überragenden Keilspitzen können in der verspannten Lage der Installationsdose vom Monteur entfernt werden, beispielsweise durch Abschneiden der Keilspitzen in Höhe des Mündungsrands.

Durch die angegebene Ausbildung ist zum einen immer eine entsprechende Anzahl an keilförmigen Materialstreifen an den Installationsdosen angeordnet, sodass der Monteur nicht verschiedene Teile bevorraten und vor Ort mit sich führen muss, und zum anderen kann durch die filmscharnierartige Anbindung des keilförmigen Materialstreifens an der Installationsdose dieser auf besonders schnelle Art und Weise händisch in die Vormontagelage verbracht und anschließend in die die Dose aufpreizende Spannlage verstellt werden.

Insbesondere ein innenseitig mittels eines Filmscharniers an die umlaufende Wandung angeformter keilförmiger Materialstreifen ermöglicht das Einführen der Installationsdose in die Lochung der Gebäudewand oder Gebäudehohlwand auf an sich bekannte Art und Weise, ohne dass dabei Teile von der Installationsdose außenseitig abragen, die die Einführung in die Lochung behindern könnten. Auch bei außenseitig mittels eines Filmscharniers an die umlaufende Wandung angeformten keilförmigen Materialstreifen können diese vom Monteur vor Einführen der Installationsdose in die Lochung bereits in eine Vormontagelage verbracht werden, in der sie kein Hindernis beim Einführen in die Lochung bilden.

Insbesondere kann dabei besonders bevorzugt vorgesehen sein, dass über den Umfang verteilt zwei gegenüberliegende Schlitze mit entsprechenden Spreizmitteln ausgebildet beziehungsweise angeordnet sind.

Die Anordnung von zwei über den Umfang verteilt gegenüberliegenden Schlitzen teilt die umlaufende Wandung der Installationsdose in einem Teilbereich etwa mittig auf, sodass die nun gebildeten Dosenhälften gleichmäßig mit ihrem äußeren Mantel gegen die Lochlaibung verspannt werden können.

Dabei kann besonders bevorzugt vorgesehen sein, dass die nutartigen Führungen und die Längsseiten des keilförmigen Materialstreifen schwalbenschwanzartige Form aufweisen.

Hierdurch ist eine Verstellung des Materialstreifens aus der Vormontagelage in die gespannte Spreizlage auch bei höheren Spannkräften sichergestellt, da durch die schwalbenschwanzartige Form sowohl der nutartigen Führungen als auch der Längsseiten des keilförmigen Materialstreifens dieser beispielsweise auch bei auftretenden Verwindungen innerhalb der schwalbenschwanzartigen Führungen verbleibt. Somit können also auch hohe Spannkräfte durch den keilförmigen Materialstreifen auf die dem Schlitz benachbarten Bereiche der umlaufenden Wandung übertragen werden, um diese in dieser Lage sicher gegen die Lochlaibung zu verspreizen.

Weiter kann besonders bevorzugt vorgesehen sein, dass die dem Schlitz benachbarten nutartigen Führungen in Richtung des Bodens der Installationsdose zueinander konvergierend verlaufen.

Auch hierdurch ist zum einen ein sicheres Verstellen des keilförmigen Materialstreifens aus der Vormontagelage in die Spannlage, in der die umlaufenden Wandungsteile gegen die Lochlaibung verspreizt sind, ermöglicht und zum anderen kann durch die konvergierende Anordnung der Grad der Aufspreizung der Dosenhälften bestimmt werden. Das heisst beispielsweise können die konvergierenden Führungen derart zueinander angeordnet sein, dass die Installationsdose in einem dem bodennahen Bereich deutlich weniger aufgespreizt wird, als in einem dem Mündungsrand nahen Bereich.

Zudem kann besonders bevorzugt vorgesehen sein, die Schlitze und die nutartigen Führungen zur Mündungsseite der Installationsdose randoffen ausgebildet sind.

Hierdurch ist es insbesondere ermöglicht, auch Installationsdosen aus einem formstabilen Kunststoff auf die gewünschte Art und Weise aufzuspreizen, sodass auch derartige Dosen aus Hartkunststoff mittels nutartiger Führungen und einem keilförmigen Materialstreifen aufspreizbar und gegen die Lochlaibung einer Gebäudewand oder Gebäudehohlwand verspannbar sind.

Weiterhin kann besonders bevorzugt vorgesehen sein, dass der keilförmige Materialstreifen in einer nicht gespannten Vormontagelage den Mündungsrand der Installationsdose nach außen überragt und in der gespannten Gebrauchslage bündig zum Mündungsrand angeordnet ist.

Bereits beim Einführen der Installationsdose in die Lochung der Gebäudewand oder Gebäudehohlwand werden die keilförmigen Materialstreifen in eine Vormontagelage, in der sich die keilförmigen Materialstreifen zwischen den nutartigen Bereichen der umlaufenden Wandung befindet, vorpositioniert, sodass anschließend zur Verspannung und Aufspreizung der Teile der umlaufenden Wandung die keilförmigen Materialstreifen lediglich in Einbaurichtung, das heißt in einer parallel zur Mittellängsachse der Installationsdose gerichteten Richtung in die Lochung der Gebäudewand oder Gebäudehohlwand hineingeschoben werden müssen, bis sich die in der Vormontagelage über die Mündung der Installationsdose hervorragenden Enden in einer etwa bündigen Lage zu dem Mündungsrand der Installationsdose befinden.

Auch ist hierdurch ist insbesondere die spätere Montage von Abdeckungen oder Blenden, die die Installationsdose vollständig überdecken, ohne Behinderungen ermöglicht.

Zudem kann besonders bevorzugt vorgesehen sein, dass jeder keilförmige Materialstreifen einen Werkzeugeingriff aufweist.

Dabei kann besonders bevorzugt vorgesehen sein, dass der Werkzeugeingriff aus einer quadratischen oder einer rechteckigen Lochung besteht.

Eine derartige Lochung innerhalb des keilförmigen Materialstreifens kann beispielsweise mit einem hakenartigen Zugwerkzeug oder dergleichen Hilfsmittel auf schnelle und einfache Art und Weise betätigt werden. Dies kann beispielsweise erforderlich sein, um den keilförmigen Materialstreifen zu spannen oder auch um diesen aus der Spannlage wieder in die Loslage zu verbringen.

Somit ist es ermöglicht, eine erfindungsgemäße Hohlwanddose auch mehrfach zu verwenden.

Weiterhin kann besonders bevorzugt vorgesehen sein, dass die umlaufende Wandung außenseitig Mittel aufweist, die den Reibschluss und/ oder den Kraftschluss gegenüber der Lochlaibung erhöhen.

Durch derartige außenseitig auf der umlaufenden Wandung aufgebrachte Mittel ist die Reibung gegenüber der Lochlaibung erhöht, sodass ein sicheres Verbleiben in der Montagesolllage sichergestellt ist.

Dabei kann besonders bevorzugt vorgesehen sein, dass die Mittel durch eine wellenförmige oder trapezförmige Oberflächenstruktur gebildet sind.

Auch kann dabei besonders bevorzugt vorgesehen sein, dass die Mittel durch eine auf der umlaufenden Wandung außen angeordnete oder aufgebrachte Gummierung gebildet sind.

Sowohl die Anordnung einer wellenförmigen oder trapezförmigen Oberflächenstruktur als auch beispielsweise einer im 2-K-Verfahren aufgebrachten Gummierung außen auf der umlaufenden Wandung sind dabei bewährte Mittel, die den Reibschluss der Installationsdose gegenüber der Lochlaibung der Gebäudewand oder Gebäudehohlwand und somit dem sicheren Sitz der Installationsdose erhöhen.

Darüber hinaus kann besonders bevorzugt vorgesehen sein, dass die Materialstreifen den Reibschluss und/ oder den Kraftschluss gegenüber der Lochlaibung erhöhende, nach außen abragende Vorsprünge aufweisen.

Auch die Anordnung derartiger Vorsprünge erhöht den Reibschluss der Installationsdose gegenüber der Lochlaibung, sodass hierdurch der Halt in der Montagesollage zusätzlich gesichert ist.

Dabei kann besonders bevorzugt vorgesehen sein; dass mehrere, aufeinander folgende Vorsprünge außenseitig auf dem Materialstreifen angeordnet sind, wobei die Höhe der Vorsprünge von der durch die Mündung der Installationsdose gebildeten Ebene in Richtung der Bodens der Installationsdose abnimmt.

In an sich bekannter Art und Weise kann besonders bevorzugt vorgesehen sein, dass der Boden des Dosenkörpers nach Art eines Kegelstumpfes, vom Doseninneren weg zur umlaufenden Wandung hin gerichtet angeformt ist.

Zur erleichterten Zuführung und gegebenenfalls auch Abführung von beispielsweise Elektrokabeln kann besonders bevorzugt vorgesehen sein, dass im Boden der Installationsdose oder in einem kegelstumpfartigen Bereich ausbrechbare oder durchstoßbare Bereiche ausgebildet sind.

Auch diese Anordnung von ausbrechbaren oder durchstoßbaren Bereichen ist an sich bekannt und hat sich bewährt. Hierdurch können auch im Bedarfsfall mehrere Bereiche durchgestoßen oder ausgebrochen werden, sodass eine größere Anzahl, beispielsweise von zuzuführenden oder abzuführenden Kabeln der Installationsdose zugeführt oder aus dieser heraus wieder abgeführt werden können.

Zudem kann in an sich bekannter Art und Weise besonders bevorzugt vorgesehen sein, dass die umlaufende Wandung an ihrem freien, mündungsseitigen Ende einen nach außen abragenden, einen Flanschrand bildenden, Kragen aufweist.

Hierdurch kann die Dose auf besonders schnelle und einfache Art und Weise vom Monteur in ihre Montagesolllage eingesetzt werden, da der Monteur die Installationsdose lediglich soweit in die Lochung hineinschieben muss, bis diese mit dem so gebildeten Flanschrand an der die Lochung umgebenden Gebäudewand oder Gebäudehohlwand anliegt. Anschließend muss die Installationsdose lediglich in dieser Lage fixiert, also verspannt werden.

Zudem kann vorgesehen sein, dass die umlaufende Wandung zumindest über einen Teil ihrer Länge elastisch ausgebildet ist.

Dabei kann besonders bevorzugt vorgesehen sein, dass der elastische Bereich faltenbalgartig ineinander schiebbar oder ineinander geschoben und streckbar oder gestreckt ist.

Die Anordnung eines derartigen elastischen Bereiches an der umlaufenden Wandung ermöglicht die Verwendung derartiger Installationsdosen auch in nur geringe Tiefe aufweisenden Lochungen einer Gebäudewand oder Gebäudehohlwand. Der elastische Bereich ist dabei üblicherweise nahe des Bodens an der umlaufenden Wandung ausgebildet. Der Monteur vor Ort kann somit die erfindungsgemäße Installationsdose auch bei nur geringe Tiefe aufweisenden Lochungen verwenden, und muss somit nicht verschiedene Länge aufweisende Dosen zur Montage vor Ort bevorraten und vorhalten.

Der elastische Bereich kann dabei aus einem Weichkunststoff oder Gummi bestehen und eine derartige erfindungsgemäße Installationsdose beispielsweise im 2-K-Verfahren hergestellt sein.

Darüber hinaus kann besonders bevorzugt vorgesehen sein, dass an der Innenseite der umlaufenden Wandung der Installationsdose parallel zur Einbaurichtung verlaufende Schraubdome angeordnet sind.

Die Anordnung derartiger Schraubdome hat sich bewährt, um auf schnelle und einfache Art und Weise entsprechende Geräte innerhalb des Einbauraumes der Inställationsdose zu fixiern.

Zur besonders und schnellen und einfachen Montage und Demontage einer Installationsdose der eingangs genannten Art schlägt die Erfindung ein Werkzeug vor, wobei das Werkzeug einen etwa hohlzylindrischen Grundkörper mit einem Handgriff an einem Endbereich aufweist, wobei der Außendurchmesser des zylindrischen Grundkörpers geringfügig kleiner ist als der den Installationsraum bildende Innendurchmesser der Installationsdose, sodass der zylindrische Grundkörper des Werkzeugs mittels des Handgriffs in den Installationsraum der Installationsdose einführbar ist, wobei der zylindrische Grundkörper außenseitig gegenüberliegende Längsnutenpaare aufweist, innerhalb derer in der Gebrauchslage des Werkzeugs Teile der Installationsdose, nämlich die keilförmigen Materialstreifen, angeordnet sind, wobei in einem ersten Längsnutenpaar federnde Rastmittel angeordnet sind, die in die Werkzeugseingriffslochungen der keilförmigen Materialstreifen eingreifen, und an einem zweiten Längsnutenpaar je ein nach außen von dem mündungsseitigen Ende abragender Vorsprung ausgebildet ist, der in Montagelage jeweils die Stirnkante der durch die keilförmigen Materialstreifen gebildeten Spreizmittel übergreift, wobei ferner einer drittes und ein viertes Längsnutenpaar ausgebildet ist, welches jeweils einen Freiraum für die Schraubdome bildet.

Ein derartiges Werkzeug kann sowohl zur Montage also zum Einsetzen der Dose in die Lochung und anschließenden Fixieren innerhalb der Lochung als auch zur Demontage, also zum späteren Entfernen aus der Lochung Verwendung finden. Hierzu kann das Werkzeug in einer jeweiligen Stellung, also einer Montagestellung und einer Demontagestellung, mit der Installationsdose verbunden beziehungsweise in diese eigeführt werden. In der Montagelage greift dabei der zylindrische Grundkörper des Werkzeugs in den Montageraum der Installationsdose ein, und es liegen die an dem zweiten Längsnutenpaar nach außen abragenden Vorsprünge an den freien Enden der keilförmigen Materialstreifen an. Beim Ausüben von Druck in Montagerichtung, also entlang der Mittellängsachse der Installationsdose in die Lochung hinein, treffen die außen abragenden Vorsprünge auf die freien Enden der keilförmigen Materialstreifen auf und verschieben die keilförmigen Materialstreifen entlang der nutartigen Führungen an den entsprechenden Bereichen der umlaufenden Wandung der Installationsdose in die die umlaufende Wandung aufspreizende Spannlage. Die Verschiebung erfolgt so weit, bis die freien Enden der keilförmigen Materialstreifen bündig zur Mündung der Installationsdose angeordnet sind. Gleichzeitig wird dabei durch das Werkzeug die Installationsdose lagerichtig, das heißt mit dem Flanschrand an der die Lochung begrenzenden Gebäudewandung anliegend gehalten.

Falls der Monteur das Werkzeug zur Demontage einer derartigen Installationsdose benutzen möchte, so muss er das Werkzeug in einer geringfügig verdrehten Lage gegenüber der Montagelage in den Installationsraum der Installationsdose einführen. Dabei greifen zuerst die in dem ersten Längsnutenpaar angeordneten, federnden Rastmittel in die Installationslochungen der keilförmigen Materialstreifen. Anschließend kann der Monteur durch Ziehen des Handgriffes zuerst die keilförmigen Materialstreifen aus der Spannlage in die Loslage verstellen und anschließend die Installationsdose aus der Lochung der Gebäudewand herausziehen.

An dem Werkzeug sind dabei entsprechende weitere Längsnutenpaare ausgebildet, die in der jeweiligen Lage des Werkzeugs, also in der Montagelage und in der Demontagelage, einen Freiraum für die Schraubdome der Installationsdose bilden.

Mit einem derartigen erfindungsgemäßen Werkzeug kann eine Installationsdose der eingangs genannten Art besonders schnell und lagesicher sowohl positioniert und fixiert als auch falls gewünscht wieder demontiert werden.

Ausführungsbeispiele der Erfindung sind in den Figuren dargestellt und im Folgenden näher beschrieben.

Es zeigt:
- Figur 1: ein Ausführungsbeispiel der Erfindung schräg von oben gesehen;
- Figur 2: desgleichen schräg von unten gesehen;
- Figur 3: desgleichen in Draufsicht;
- Figur 4: den Schnitt A-A aus Figur 3;
- Figuren 5-8: das Ausführungsbeispiel im Längsschnitt in verschiedenen Einbaulagen an einer Gebäudehohlwand;
- Figur 9: ein erfindungsgemäßes Werkzeug in Seitenansicht;
- Figur 10: das gleiche von schräg oben gesehen;
- Figur 11: desgleichen in Einbaulage an einer Gebäudewandung;
- Figur 12: Teile des Werkzeugs in vergrößerter Ansicht.

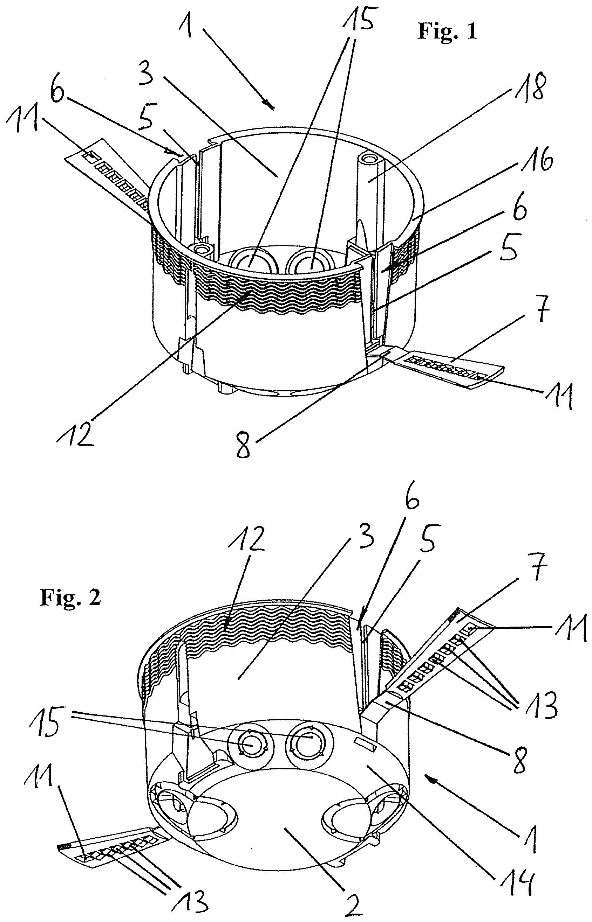

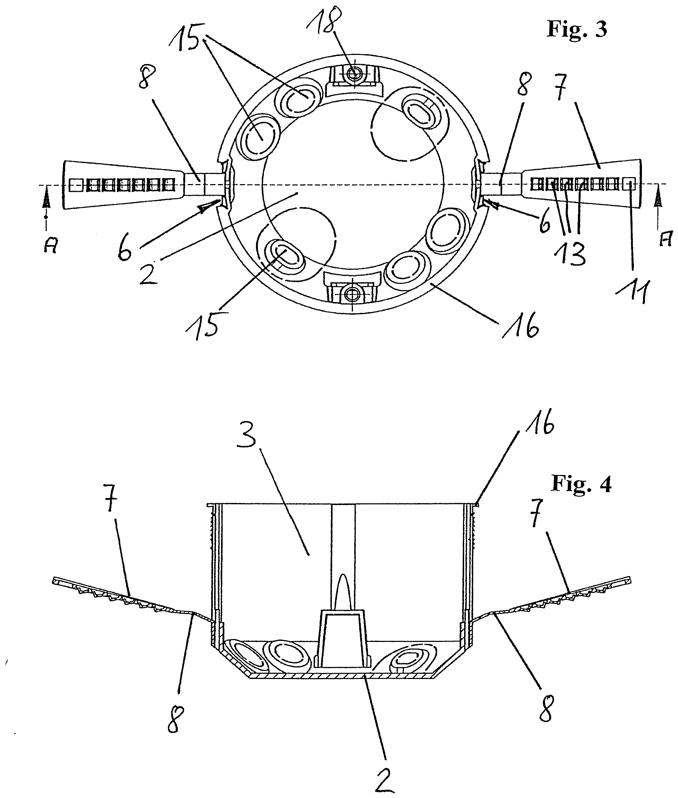

In den Figuren 1 bis 8 ist ein erstes Ausführungsbeispiel der Erfindung gezeigt. Die Figuren 1 bis 8 zeigen eine Installationsdose 1 aus Kunststoff für elektrotechnische Zwecke. Die Installationsdose 1 weist zumindest einen topfartigen Dosenkörper mit einem Boden 2 und eine vom Boden 2 abragende umlaufende Wandung 3 auf. Zudem weist die Installationsdose 1 Mittel zur Befestigung an oder in einer Lochung einer Gebäudewand oder einer Gebäudehohlwand 4 auf.

Erfindungsgemäß weist die umlaufende Wandung 3 der Installationsdose 1 parallel zur Mittellängsachse des Dosenkörpers über einen Teil ihrer Länge verlaufende Schlitze 5 auf. Dabei sind den Schlitz 5 überdeckende Spreizmittel an der Wandung 3 angeordnet, die in ihrer in die Lochung der Gebäudehohlwand 4 eingesetzten Gebrauchslage der Installationsdose 1 die umlaufende Wandung 3 im Bereich des Schlitzes 5 aufspreizen und die umlaufende Wandung 3 an die Lochlaibung anspannen oder angedrückt halten.

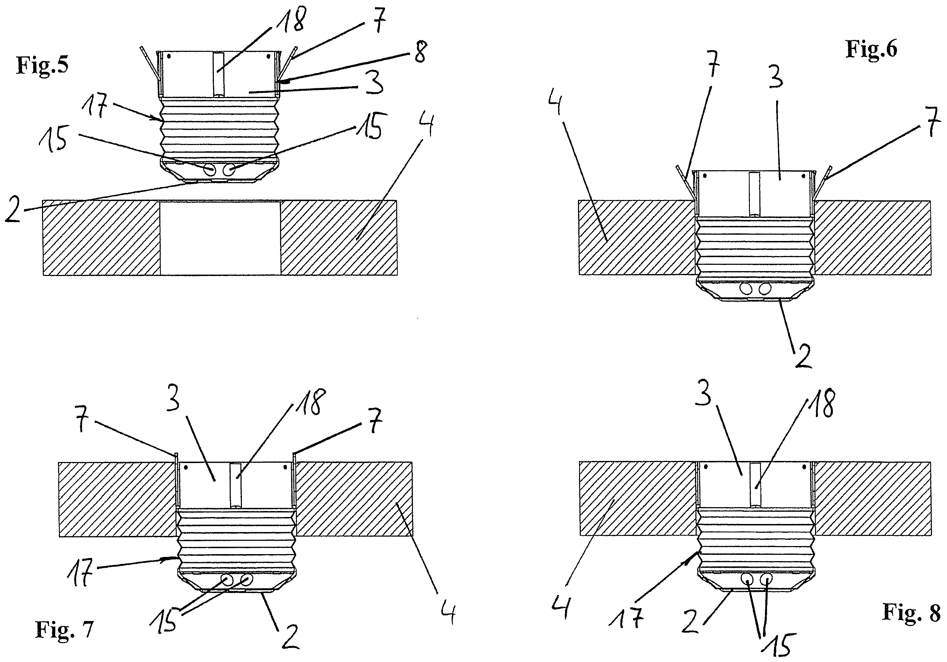

Bei dem in den Figuren gezeigten Ausführungsbeispiel sind über den Umfang der umlaufenden Wandung 3 verteilt zwei gegenüberliegende Schlitze 5 ausgebildet und mit entsprechenden Spreizmitteln spreizbar, sodass die umlaufende Wandung 3 im Bereich des Schlitzes 5 aufgespreizt ist und gegen die Lochlaibung angespannt gehalten ist. Die dem Schlitz 5 benachbarten Bereiche der umlaufenden Wandung 3 sind im Ausführungsbeispiel der Figuren 1 bis 8 verjüngt und angrenzend an den jeweiligen verjüngten Bereich ist eine nutartige Führung 6 ausgebildet. In der nutartigen Führung 6 ist jeweils eine Längsseite eines keilförmigen Materialstreifens 7, welcher das Spreizmittel bildet, führbar (Figuren 1 bis 6) beziehungsweise geführt (Figuren 7 und 8). Um ein Herausgleiten beim Führen des keilförmigen Materialstreifens 7 entlang der nutartigen Führung 6 zu verhindern, ist sowohl die nutartige Führung 6 als auch jede Längsseite des keilförmigen Materialstreifens 7 schwalbenschwanzartig geformt. Hierdurch ist ein ungewolltes Herausgleiten des keilförmigen Materialstreifens 7 aus der nutartigen Führung 6 beim Verstellen des keilförmigen Materialstreifens 7 innerhalb der nutartigen Führung 6 auch beim Aufbringen von hohen Spannkräften vermieden.

Die dem Schlitz 5 benachbarten nutartigen Führungen 6 verlaufen in Richtung des Bodens 2 der Installationsdose 1 zueinander konvergierend.

Im Ausführungsbeispiel sind die Schlitze 5 und die nutartigen Führungen 3 zur Mündungsseite der Installationsdose 1 randoffen ausgebildet. Hierdurch ist insbesondere auch die Verwendung von einem formstabilen, harten Kunststoff zur Herstellung der Installationsdosen 1 ermöglicht. Bei der Verwendung eines elastischen, nicht formstabilen Kunststoffes, zumindest im Umgebungsbereich der Schlitze 5 ist die randoffene Ausbildung der Schlitze 5 nicht notwendig.

Im Ausführungsbeispiel ist jeder keilförmige Materialstreifen 7 im Bereich seines in Einbaurichtung vorderen, dem Boden 2 angenäherten, Endes an die umlaufende Wandung 3 mittels eines Filmscharniers 8 außenseitig an die umlaufende Wandung 3 angeformt. Hierdurch ist es jederzeit sichergestellt, dass eine ausreichende Anzahl an keilförmigen Materialstreifen 7 zur Verspannung der Installationsdose 1 in die Spreizlage mitgeführt ist. Somit ist die Anzahl an zu bevorratenden und vorzuhaltenden Teilen für den Monteur vor Ort verringert.

In einem alternativen, in den Figuren nicht gezeigten Ausführungsbeispiel ist jeder keilförmige Materialstreifen 7 im Bereich seines in Einbaurichtung vorderen, dem Boden 2 angenäherten Endes an die umlaufende Wandung 3 mittels eines Filmscharniers innenseitig an die umlaufende Wandung 3 angeformt. Auch hierdurch ist es jederzeit sichergestellt, dass eine ausreichende Anzahl an keilförmigen Materialstreifen 7 zur Verspannung der Installationsdose 1 in die Spreizlage mitgeführt ist. Zudem ist durch diese Lösung sichergestellt, dass die mittels des Filmscharniers angeformten Materialstreifen 7 nicht beim Einführen der Installationsdose 1 in die Lochung der Gebäudewand oder Gebäudehohlwand 4 ein Hindernis bilden oder gegebenenfalls bei einer Unachtsamkeit des Monteurs von der umlaufenden Wandung 3 abgetrennt und gegebenenfalls verloren werden.

Die innenseitig an die umlaufende Wandung 3 angeformten keilförmigen Materialstreifen 7 sind somit in einer Vormontagelage innerhalb des Installationsraumes der Installationsdose 1 angeordnet und werden beispielsweise erst nach Einführen der Installationsdose 1 in die Lochung einer Gebäudewand oder Gebäudehohlwand 4 der umlaufenden Wandung 3 angenähert und entsprechend in die Spreizlage verbracht.

Wie insbesondere aus den Figuren 5 bis 7 ersichtlich, überragt der keilförmige Materialstreifen 7 in einer nicht gespannten Vormontagelage den Mündungsrand der Installationsdose 1 nach außen und wie insbesondere aus Figur 8 ersichtlich, ist der keilförmige Materialstreifen 7 in der gespannten und verspreizten Gebrauchslage bündig zum Mündungsrand der Installationsdose 1 angeordnet.

Somit ist es sichergestellt, dass der keilförmige Materialstreifen 7 keinerlei Teile, die später die Installationsdose 1 außen überdecken, stören kann.

Die im Ausführungsbeispiel in den Figuren 1 bis 8 gezeigten Materialstreifen 7 können einen Werkzeugeingriff, beispielsweise gebildet aus einer quadratischen oder rechteckigen Lochung 11 aufweisen. Hierdurch ist jeder keilförmige Materialstreifen 7 leichter handhabbar, beispielsweise in dem ein hakenartiges Werkzeug in diesen eingreift und diesen aus der nicht gespannten Vormontagelage in die Spannlage verstellt.

Um den Reibschluss und/ oder Kraftschluss gegenüber der Lochlaibung der Gebäudewand oder der Gebäudehohlwand zu erhöhen, können auf der umlaufenden Wandung 3 außenseitig Mittel angeordnet sein, die den Reibschluss und/ oder den Kraftschluss erhöhen. Die Mittel können beispielsweise durch eine wellenförmige oder eine trapezförmige Oberflächenstruktur 12 gebildet sein. Auch können die Mittel durch eine auf der umlaufenden Wandung 3 außen angeordnete oder aufgebrachte Gummierung gebildet sein. Diese Gummierung kann beispielsweise im 2-K-Verfahren auf die umlaufende Wandung 3 aufgebracht werden.

Als weiteres Mittel zur Erhöhung des Reibschlusses und/ oder des Kraftschlusses der Installationsdose 1 gegenüber der Lochlaibung sind bei dem in den Figuren 1 bis 8 gezeigten Ausführungsbeispiel an den Materialstreifen 7 nach außen abragende Vorsprünge 13 ausgebildet. Dabei sind mehrere aufeinander folgende Vorsprünge 13 außenseitig auf dem Materialstreifen 7 angeordnet, wobei die Höhe der Vorsprünge 13 von der durch die Mündung der Installationsdose 1 gebildeten Ebene in Richtung des Bodens 2 der Installationsdose abnimmt.

Derartige Vorsprünge 13 werden beim Verspannen der keilförmigen Materialstreifen 7 in die Spannlage an die Lochlaibung gespannt, beziehungsweise gegen diese verspresst, um somit den Halt der Installationsdose 1 in der Einbaulage zu erhöhen. Wie insbesondere aus den Figuren 1 bis 4 ersichtlich, sind im Boden 2 der Installationsdose 1, insbesondere im kegelstumpfartigen Bereich 14 ausbrechbare oder durchstoßbare Bereiche 15 zur Zuführung und Abführung beispielsweise von Kabeln ausgebildet. Diese können vom Monteur vor Ort je nach Bedarf durchstoßen beziehungsweise herausgebrochen werden, um eine entsprechende Anzahl von Kabeln in die Dose hineinzuführen oder aus der Dose hinauszuführen.

Zur Befestigung von entsprechenden Geräten innerhalb des Einbauraumes der Installationsdose 1 sind an der Innenseite der umlaufenden Wandung 3 der Installationsdose 1 parallel zur Einbaurichtung verlaufende Schraubdome 18 angeordnet.

Die umlaufende Wandung 3 ist zumindest über einen Teil ihrer Länge elastisch ausgebildet. Der elastische Bereich 17 kann dabei faltenbalgartig ineinandergeschoben und nach Wunsch oder Bedarf auseinandergezogen und somit gestreckt werden. Eine derartige erfindungsgemäße Installationsdose 1 kann vom Monteur vor Ort auch in Lochungen an einer Gebäudewand oder Gebäudehohlwand 4 eingesetzt und verwendet werden, die nur eine geringe Einbautiefe aufweisen. Der Monteur muss somit nicht Installationsdosen 1 mit unterschiedlicher Länge mit sich führen, um diese in entsprechend tiefe Lochungen einbauen zu können.

Je nach Menge der eingeführten und auch wieder hinausgeführten Kabel und abhängig von dem in den Installationsraum der Installationsdose 1 eingesetzten elektrischen Gerät kann es nötig sein, die Installationsdose 1 entsprechend länger auszubilden, um genügend Freiraum für die Kabel und/ oder das eingebaute Gerät zur Verfügung zu stellen.

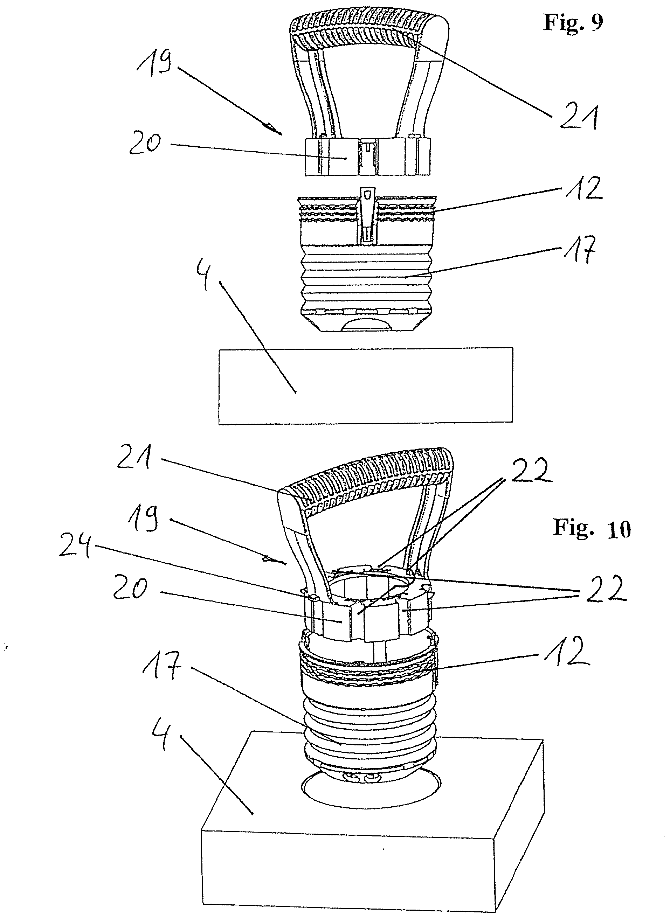

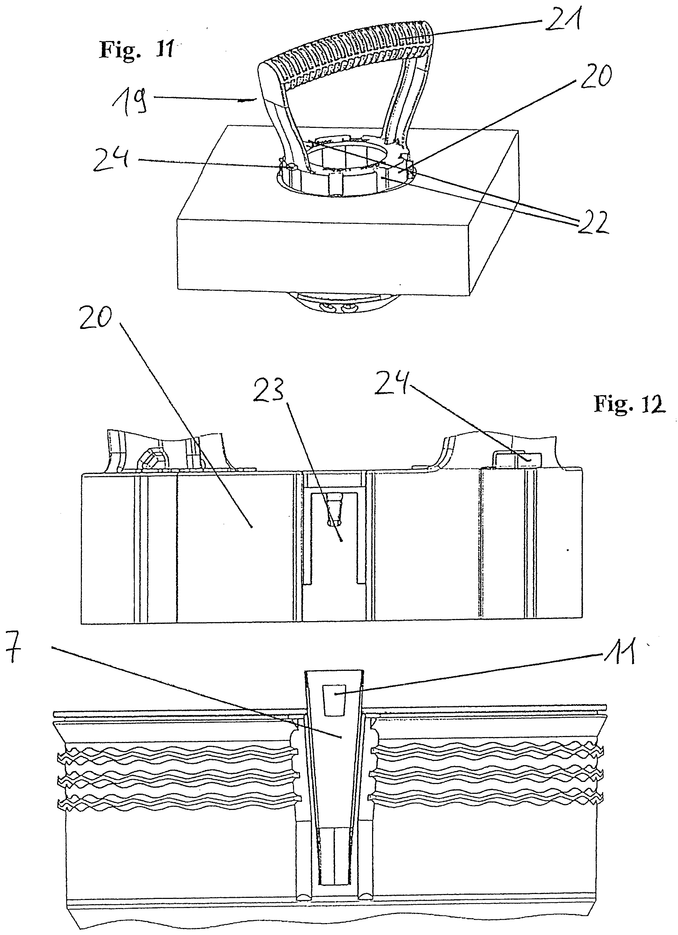

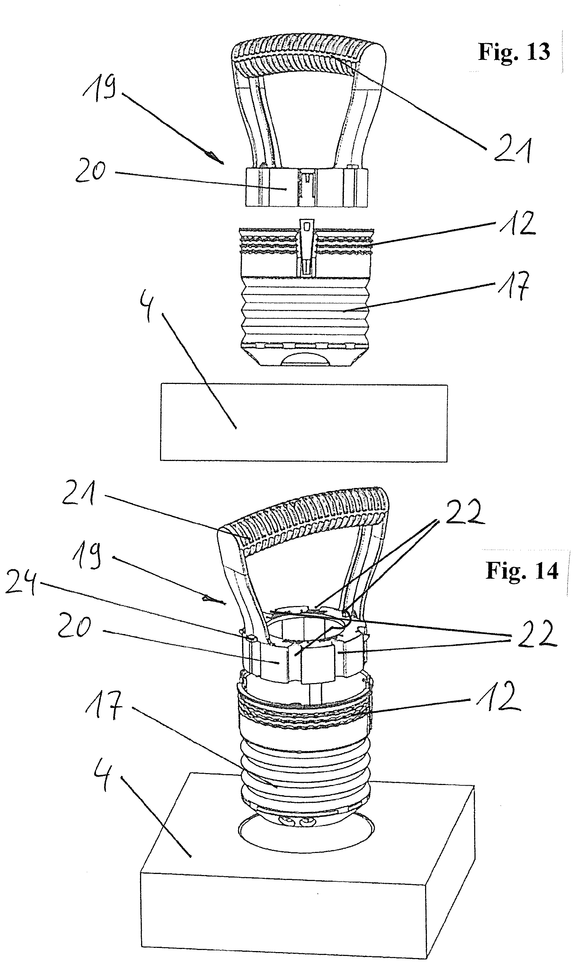

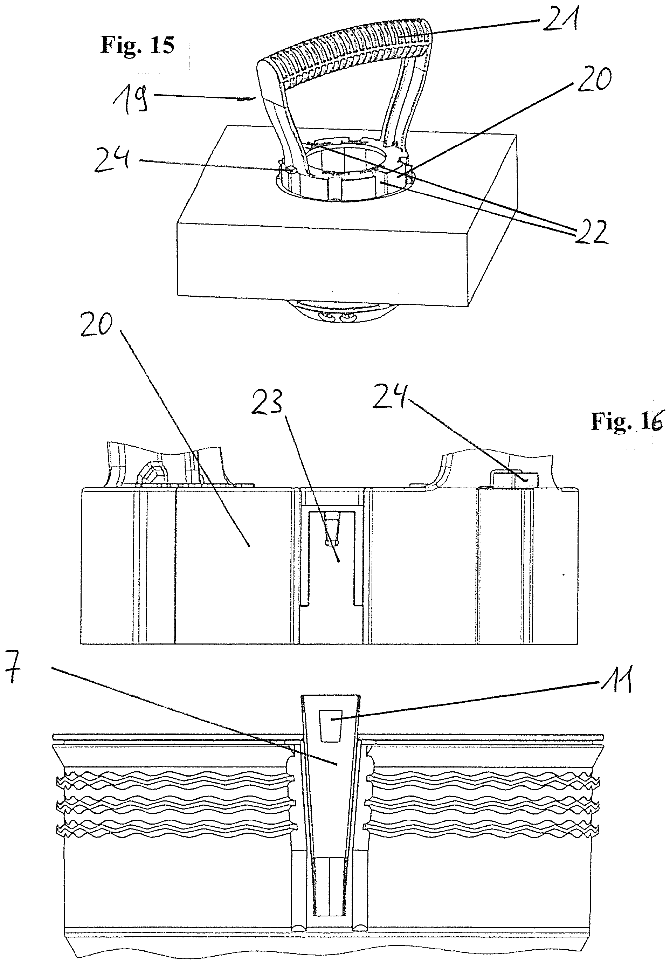

Zusätzlich stellt die Erfindung ein in den Figuren 9 bis 12 gezeigtes Werkzeug 19 zur Montage und Demontage einer Installationsdose 1 gemäß Ausführungsbeispiel der Erfindung zur Verfügung. Das Werkzeug 19 weist erfindungsgemäß einen etwa hohlzylindrischen Grundkörper 20 mit einem Handgriff 21 an einem ersten Endbereich auf. Dabei ist der Außendurchmesser des zylindrischen Grundkörpers 20 geringfügig kleiner als der den Installationsraum bildende Innendurchmesser der Installationsdose 1. Hierdurch ist der zylindrische Grundkörper 20 des Werkzeugs 19 auf einfache Art und Weise in den Installationsraum der Installationsdose 1 mittels des Handgriffs 21 einführbar. Der zylindrische Grundkörper 20 weist außenseitig gegenüberliegende Längsnutenpaare 22 auf. Dabei sind je nach Einsatzweck des Werkzeugs 19, also zur Montage oder zur Demontage der Installationsdose 1 mittels des Werkzeugs 19, die keilförmigen Materialstreifen 7 in einem ersten oder in einem zweiten Längsnutenpaar 22 des Werkzeugs 19 angeordnet. Zur Demontage einer entsprechenden Installationsdose 1 sind in einem ersten Längsnutenpaar 22 federnde Rastmittel 23 angeordnet, die in die Werkzeugeingriffslochungen 11 der keilförmigen Materialstreifen 7 eingreifen. An einem zweiten Längsnutenpaar 22 ist je ein nach außen von dem mündungsseitigen Ende abragender Vorsprung 24 ausgebildet, der in der der Montagelage jeweils die Stirnkante der keilförmigen Materialstreifen 7, die das Spreizmittel bilden, übergreift. Ferner ist am Werkzeug 19 ein drittes und ein viertes Längsnutenpaar 22 ausgebildet, welches in der jeweiligen Lage, also in der Montagelage oder in der Demontagelage des Werkzeuges 19 jeweils einen Freiraum für die Schraubdome 18 der Installationsdose 1 bildet.

Vom Monteur vor Ort kann ein derartiges Werkzeug 19 auf schnelle und einfache Art und Weise entweder in der Montagelage oder in der Demontagelage an einer Installationsdose 1 vorpositioniert werden, um die Installationsdose 1 entweder zu montieren oder zu demontieren. Dazu wird das Werkzeug 19 in der entsprechenden Positionierung teilweise in den Installationsraum der Installationsdose 1 eingeführt und kann in der jeweiligen Lage entweder mittels Eingreifen der federnden Rastmittel 23 in die Werkzeugeingriffslochungen 11 die Installationsdose 1 lösen und anschließend demontieren oder mittels der abragenden Vorsprünge 24 Druck auf die keilförmigen Materialstreifen 7 ausüben und diese in die zur Mündungsebene bündige Spannlage verstellen und die Installationsdose 1 in der Gebrauchslage fixieren.

### Bezugszeichenliste:

- 1: Installationsdose
- 2: Boden
- 3: umlaufende Wandung (von 1)
- 4: Gebäudehohlwand
- 5: Schlitze an 3
- 6: nutartige Führung an 3
- 7: keilförmiger Materialstreifen
- 8: Filmscharnier
- 9: ringförmiges Ende
- 11: Lochung an 7
- 12: Oberflächenstruktur an 3
- 13: Vorsprünge an 7
- 14: Kegelstumpf
- 15: durchstoßbare Bereiche
- 16: Kragen an 3
- 17: elastischer Bereich von 3
- 18: Schraubdome
- 19: Werkzeug
- 20: Grundkörper an 19
- 21: Handgriff
- 22: Längsnutenpaare
- 23: federnde Rastmittel
- 24: Vorsprung an 19

## Patentansprüche

1. Installationsdose (1) aus Kunststoff für elektrotechnische Zwecke, zumindest aufweisend einen topfartigen Dosenkörper mit einem Boden (2) und eine vom Boden (2) abragende umlaufende Wandung (3), zudem aufweisend Mittel zur Befestigung an oder in einer Lochung einer Gebäudewand oder einer Gebäudehohlwand (4), wobei die umlaufende Wandung (3) parallel zur Mittellängsachse des Dosenkörpers über einen Teil ihrer Länge verlaufende Schlitze (5) aufweist, wobei den Schlitz (5) überdeckende Spreizmittel an der Wandung (3) ausgebildet oder angeordnet sind, die in ihrer in die Lochung der Wand eingesetzten Gebrauchslage der Installationsdose (1) die umlaufende Wandung (3) im Bereich des Schlitzes (5) aufspreizen und die umlaufende Wandung (3) an die Lochlaibung anspannen oder angedrückt halten, wobei die Spreizmittel durch Manipulation aus ihrer Vormontagelage in eine Spreizlage verstellbar sind, in der die umlaufende Wandung (3) der Installationsdose (1) im Bereich des jeweiligen Schlitzes (6) aufgespreizt ist, **dadurch gekennzeichnet, dass** in beiden dem Schlitz (5) benachbarten Bereichen die umlaufende Wandung der Installationsdose (1) verjüngt ist und angrenzend an den jeweiligen verjüngten Bereich jeweils eine nutartige Führung (6) ausgebildet ist, in der je eine Längsseite eines keilförmigen Materialstreifens (7), welcher das Spreizmittel bildet, führbar oder geführt ist, und dass der keilförmige Materialstreifen (7) im Bereich seines in Einbaurichtung vorderen, dem Boden (2) angenäherten, Endes innenseitig oder außenseitig an die umlaufende Wandung (3) mittels eines Filmscharniers (8) angeformt ist.

2. Installationsdose (1) nach Anspruch 1, **dadurch gekennzeichnet, dass** über den Umfang verteilt zwei gegenüberliegende Schlitze (5) mit entsprechenden Spreizmitteln ausgebildet beziehungsweise angeordnet sind.

3. Installationsdose (1) nach Anspruch 1, **dadurch gekennzeichnet, dass** die nutartigen Führungen (6) und die Längsseiten des keilförmigen Materialstreifen (7) schwalbenschwanzartige Form aufweisen.

4. Installationsdose (1) nach Anspruch 1 oder 3, **dadurch gekennzeichnet, dass** die dem Schlitz (5) benachbarten nutartigen Führungen (6) in Richtung des Bodens (2) der Installationsdose (1) zueinander konvergierend verlaufen.

5. Installationsdose (1) nach einem der Ansprüche 1 bis 4, **dadurch gekennzeichnet, dass** die Schlitze (5) und die nutartigen Führungen (3) zur Mündungsseite der Installationsdose (1) randoffen ausgebildet sind.

6. Installationsdose (1) nach einem der Ansprüche 1 bis 5, **dadurch gekennzeichnet, dass** der keilförmige Materialstreifen (7) in einer nicht gespannten Vormontagelage den Mündungsrand der Installationsdose (1) nach außen überragt und in der gespannten Gebrauchslage bündig zum Mündungsrand angeordnet ist.

7. Installationsdose (1) nach einem der Ansprüche 1 bis 6, **dadurch gekennzeichnet, dass** jeder keilförmige Materialstreifen (7) einen Werkzeugeingriff aufweist.

8. Installationsdose (1) nach Anspruch 7, **dadurch gekennzeichnet, dass** der Werkzeugeingriff aus einer quadratischen oder eine rechteckigen Lochung (11) besteht.

9. Installationsdose (1) nach einem der Ansprüche 1 bis 8, **dadurch gekennzeichnet, dass** die umlaufende Wandung (3) außenseitig Mittel aufweist, die den Reibschluss und/ oder den Kraftschluss gegenüber der Lochlaibung erhöhen.

10. Installationsdose (1) nach Anspruch 9, **dadurch gekennzeichnet, dass** die Mittel durch eine wellenförmige oder trapezförmige Oberflächenstruktur (12) gebildet sind.

11. Installationsdose (1) nach Anspruch 9 oder 10, **dadurch gekennzeichnet, dass** die Mittel durch eine auf der umlaufenden Wandung (3) außen angeordnete oder aufgebrachte Gummierung gebildet sind.

12. Installationsdose (1) nach einem der Ansprüche 1 bis 11, **dadurch gekennzeichnet, dass** die Materialstreifen (7) den Reibschluss und/ oder den Kraftschluss gegenüber der Lochlaibung erhöhende, nach außen abragende (13) Vorsprünge aufweisen.

13. Installationsdose (1) nach Anspruch 12, **dadurch gekennzeichnet, dass** mehrere, aufeinander folgende Vorsprünge (13) außenseitig auf dem Materialstreifen (7) angeordnet sind, wobei die Höhe der Vorsprünge (13) von der durch die Mündung der Installationsdose (1) gebildeten Ebene in Richtung der Bodens (2) der Installationsdose (1) abnimmt.

14. Installationsdose (1) nach einem der Ansprüche 1 bis 11, **dadurch gekennzeichnet, dass** der Boden (2) des Dosenkörpers nach Art eines Kegelstumpfes (bei 14), vom Doseninneren weg zur umlaufenden Wandung (3) hin gerichtet angeformt ist.

15. Installationsdose (1) nach Anspruch 1, **dadurch gekennzeichnet, dass** im Boden (2) der Installationsdose oder in einem kegelstumpfartigen Bereich (14) ausbrechbare oder durchstoßbare Bereiche (15) ausgebildet sind.

16. Installationsdose (1) nach einem der Ansprüche 1 bis 13, **dadurch gekennzeichnet, dass** die umlaufende Wandung (3) an ihrem freien, mündungsseitigen Ende einen nach außen abragenden, einen Flanschrand bildenden, Kragen (16) aufweist.

17. Installationsdose (1) nach einem der Ansprüche 1 bis 16, **dadurch gekennzeichnet, dass** die umlaufende Wandung (3) zumindest über einen Teil ihrer Länge elastisch ausgebildet ist.

18. Installationsdose (1) nach Anspruch 17, **dadurch gekennzeichnet, dass** der elastische Bereich (17) faltenbalgartig ineinander schiebbar oder ineinander geschoben und streckbar oder gestreckt ist.

19. Installationsdose (1) nach einem der Ansprüche 1 bis 18, **dadurch gekennzeichnet, dass** an der Innenseite der umlaufenden Wandung (3) der Installationsdose (1) parallel zur Einbaurichtung verlaufende Schraubdome (18) angeordnet sind.

20. Werkzeug (19) zur Montage und Demontage einer Installationsdose (1) nach einem oder mehreren der Ansprüche 1 bis 19, wobei das Werkzeug (19) einen etwa hohlzylindrischen Grundkörper (20) mit einem Handgriff (21) an einem Endbereich aufweist, und wobei der Außendurchmesser des zylindrischen Grundkörpers (20) geringfügig kleiner ist als der den Installationsraum bildende Innendurchmesser der Installationsdose (1), sodass der zylindrische Grundkörper (20) des Werkzeugs (19) mittels des Handgriffs (21) in den Installationsraum der Installationsdose (1) einführbar ist, **dadurch gekennzeichnet, dass** der zylindrische Grundkörper (20) außenseitig gegenüberliegende Längsnutenpaare (22) aufweist, innerhalb derer in der Gebrauchslage des Werkzeugs (19) Teile der Installationsdose (1) nämlich die keilförmigen Materialstreifen (7), angeordnet sind, wobei in einem ersten Längsnutenpaar (22) federnde Rastmittel (23) angeordnet sind,die in die Werkzeugseingriffslochungen (11) der keilförmigen Materialstreifen (7) eingreifen, und an einem zweiten Längsnutenpaar (22) je ein nach außen von dem mündungsseitigen Ende abragender Vorsprung (24) ausgebildet ist, der in Montagelage jeweils die Stirnkante der durch die keilförmigen Materialstreifen (7) gebildeten Spreizmittel übergreift, wobei ferner einer drittes und ein viertes Längsnutenpaar (22) ausgebildet ist, welches jeweils einen Freiraum für die Schraubdome bildet.

## Claims

1. An installation box (1) made of plastic for electrical purposes, at least including a pot-shaped box body with a bottom (2) and a circumferential wall (3) extending from the bottom (2), further including means for attachment to or in a hole of a building wall or a building cavity wall (4), the circumferential wall (3) including in parallel to the central longitudinal axis of the box body slits (5) extending over part of its length, with expanding means covering the slit (5) being formed or disposed at the wall (3) and, in its position of use of the installation box (1) fitted in the hole of the wall, expanding the circumferential wall (3) in the portion of the slit (5) and pressing the circumferential wall (3) against the jamb of the hole or holding it pressed thereto, the expanding means being adjustable by manipulation from their pre-mounting position to an expanded position, in which the circumferential wall (3) of the installation box (1) is spread open in the portion of the respective slit (6), **characterized by that** in both areas adjacent to the slit (5), the circumferential wall of the installation box (1) is tapered, and adjacent to the respective tapered portion one groove-type guide (6) each is formed, in which one longitudinal side each of a wedge-shaped material strip (7) forming the expanding means can be guided or is guided, and that the wedge-shaped material strip (7) is formed, in the portion of its front end, in the mounting direction, adapted to the bottom (2) at the inside or outside at the circumferential wall (3), by means of a film hinge (8).

2. The installation box (1) of claim 1, **characterized by that**, distributed over the periphery, two opposing slits (5) with corresponding expanding means are formed or arranged.

3. The installation box (1) of claim 1, **characterized by that** the groove-type guides (6) and the longitudinal sides of the wedge-shaped material strip (7) have a dovetail-like shape.

4. The installation box (1) of claim 1 or 3, **characterized by that** the groove-type guides (6) being adjacent to the slit (5) extend in a mutually convergent manner in the direction of the bottom (2) of the installation box (1).

5. The installation box (1) of one of claims 1 to 4, **characterized by that** the slits (5) and the groove-type guides (3) are formed with open edges towards the mouth side of the installation box (1).

6. The installation box (1) of one of claims 1 to 5, **characterized by that** the wedge-shaped material strip (7), in a non-tensioned pre-mounting position, extends beyond the mouth edge of the installation box (1) towards outside, and in the tensioned position of use, is disposed flush with the mouth edge.

7. The installation box (1) of one of claims 1 to 6, **characterized by that** each wedge-shaped material strip (7) includes a tool access feature.

8. The installation box (1) of claim 7, **characterized by that** the tool access feature consists of a square or rectangular hole (11).

9. The installation box (1) of one of claims 1 to 8, **characterized by that** the circumferential wall (3) comprises means on the outside that increase the friction fit and/or the force fit with respect to the jamb of the hole.

10. The installation box (1) of claim 9, **characterized by that** the means are formed by a wave-shaped or trapezoidal surface structure (12).

11. The installation box (1) of claim 9 or 10, **characterized by that** the means are formed by a gumming disposed or applied outside on the circumferential wall (3).

12. The installation box (1) of one of claims 1 to 11, **characterized by that** the material strips (7) include projections (13) increasing the friction fit and/or the force fit with respect to the jamb of the hole and projecting towards outside.

13. The installation box (1) of claim 12, **characterized by that** several successive projections (13) are disposed outside on the material strip (7), the height of the projections (13) decreasing from the plane formed by the mouth of the installation box (1) in the direction to the bottom (2) of the installation box (1).

14. The installation box (1) of one of claims 1 to 11, **characterized by that** the bottom (2) of the box body is formed in the manner of a truncated cone (at 14), from the interior of the box away to the circumferential wall (3).

15. The installation box (1) of claim 1, **characterized by that** in the bottom (2) of the installation box or in a truncated cone portion (14), break-out or break-through areas (15) are formed.

16. The installation box (1) of one of claims 1 to 13, **characterized by that** the circumferential wall (3) includes at its free mouth end a collar (16) extending towards outside and forming a flange edge.

17. The installation box (1) of one of claims 1 to 16, **characterized by that** the circumferential wall (3) is formed at least over part of its length in an elastic manner.

18. The installation box (1) of claim 17, **characterized by that** the elastic portion (17) can be moved together or is moved together and is expandable or is expanded in the manner of a bellows.

19. The installation box (1) of one of claims 1 to 18, **characterized by that** at the inside of the circumferential wall (3) of the installation box (1), screw bosses (18) extending in parallel to the mounting direction are disposed.

20. A tool (19) for mounting and dismounting an installation box (1) of one or several of claims 1 to 19, wherein the tool (19) includes an approximately hollow cylindrical basic body (20) with a handle (21) at an end portion, and wherein the outer diameter of the cylindrical basic body (20) is slightly smaller than the inner diameter of the installation box (1) forming the installation space, so that the cylindrical basic body (20) of the tool (19) can be inserted by means of the handle (21) into the installation space of the installation box (1), **characterized by that** the cylindrical basic body (20) includes on the outside opposing pairs of longitudinal grooves (22), inside of which in the position of use of the tool (19) parts of the installation box (1), namely the wedge-shaped material strips (7), are disposed, in a first pair of longitudinal grooves (22) resilient latching means (23) being disposed that engage in tool engagement holes (11) of the wedge-shaped material strips (7), and at a second pair of longitudinal grooves (22) one projection (24) each extending towards outside of the mouth-side end is formed that in the mounting position respectively extends over the front edge of the expanding means formed by the wedge-shaped material strips (7), further a third and a fourth pair of longitudinal grooves (22) being provided, each of which forms a respective free space for the screw bosses.

## Revendications

1. Boîte d'installation (1) en plastique pour des buts électriques, au moins comportant un corps de boîte en forme de pot avec un fond (2) et une paroi circonférentielle (3) s'étendant à partir du fond (2), en outre comportant des moyens pour la fixation à ou dans un trou d'une paroi de bâtiment ou une paroi creuse de bâtiment (4), la paroi circonférentielle (3) comportant en parallèle à l'axe longitudinal central du corps de boîte des fentes (5) s'étendant sur une partie de sa longueur, avec des moyens d'écartement recouvrant la fente (5) étant formés ou disposés à la paroi (3) et, dans sa position d'utilisation de la boîte d'installation (1) insérée dans le trou de la paroi, écartant la paroi circonférentielle (3) dans la zone de la fente (5) et tendant la paroi circonférentielle (3) contre la jambe du trou ou la maintenant appliquée là-contre, les moyens d'écartement étant réglables par manipulation à partir de leur position de pré-montage à une position écartée, dans laquelle la paroi circonférentielle (3) de la boîte d'installation (1) est écartée dans la zone de la fente (6) respective, **caractérisée en ce que** dans les deux zones voisines à la fente (5), la paroi circonférentielle de la boîte d'installation (1) est diminuée, et voisin à la zone diminuée respective, un guide (6) chacun en forme de rainure est réalisé, dans lequel un côté longitudinal chacun d'une bande de matériau (7) en forme de coin formant les moyens d'écartement peut être guidé ou est guidé, et que la bande de matériau (7) en forme de coin est formée, dans la zone de son extrémité avant, dans la direction de montage, adaptée au fond (2), intérieurement ou extérieurement à la paroi circonférentielle (3) au moyen d'une charnière-film (8).

2. Boîte d'installation (1) selon la revendication 1, **caractérisée en ce que**, réparties sur la périphérie, deux fentes (5) opposées avec des moyens d'écartement correspondants sont réalisées ou arrangées.

3. Boîte d'installation (1) selon la revendication 1, **caractérisée en ce que** les guides (6) en forme de rainure et les côtés longitudinaux de la bande de matériau (7) en forme de coin ont une forme de type queue d'aronde.

4. Boîte d'installation (1) selon la revendication 1 ou 3, **caractérisée en ce que** les guides (6) en forme de rainure voisins à la fente (5) s'étendent de façon convergente entre eux dans la direction du fond (2) de la boîte d'installation (1).

5. Boîte d'installation (1) selon une des revendications 1 à 4, **caractérisée en ce que** les fentes (5) et les guides (3) en forme de rainure sont réalisés avec des arêtes ouvertes vers le côté de l'embouchure de la boîte d'installation (1).

6. Boîte d'installation (1) selon une des revendications 1 à 5, **caractérisée en ce que** la bande de matériau (7) en forme de coin, dans une position de pré-montage non tendue, s'étend au-delà de l'arête de l'embouchure de la boîte d'installation (1) vers l'extérieur, et dans la position d'utilisation tendue, est disposée en affleurement avec l'arête de l'embouchure.

7. Boîte d'installation (1) selon une des revendications 1 à 6, **caractérisée en ce que** chaque bande de matériau (7) en forme de coin comporte un accès pour un outil.

8. Boîte d'installation (1) selon la revendication 7, **caractérisée en ce que** l'accès pour un outil consiste en un trou (11) carré ou rectangulaire.

9. Boîte d'installation (1) selon une des revendications 1 à 8, **caractérisée en ce que** la paroi circonférentielle (3) comprend des moyens sur l'extérieur qui augmentent la valeur de la friction et/ou de la force par rapport à la jambe du trou.

10. Boîte d'installation (1) selon la revendication 9, **caractérisée en ce que** les moyens sont réalisés par une structure de surface (12) en forme d'ondes ou de trapèze.

11. Boîte d'installation (1) selon la revendication 9 ou 10, **caractérisée en ce que** les moyens sont réalisés par une couche de gomme disposée ou appliquée à l'extérieur sur la paroi circonférentielle (3).

12. Boîte d'installation (1) selon une des revendications 1 à 11, **caractérisée en ce que** les bandes de matériau (7) comportent des saillies (13) augmentant la valeur de la friction et/ou de la force par rapport à la jambe du trou et faisant saillie vers l'extérieur.

13. Boîte d'installation (1) selon la revendication 12, **caractérisée en ce que** plusieurs saillies (13) successives sont disposées à l'extérieur sur la bande de matériau (7), la hauteur des saillies (13) se diminuant à partir du plan formé par l'embouchure de la boîte d'installation (1) dans la direction du fond (2) de la boîte d'installation (1).

14. Boîte d'installation (1) selon une des revendications 1 à 11, **caractérisée en ce que** le fond (2) du corps de boîte est formé de façon tronconique (à 14), à partir de l'intérieur de la boîte vers la paroi circonférentielle (3).

15. Boîte d'installation (1) selon la revendication 1, **caractérisée en ce que** dans le fond (2) de la boîte d'installation ou dans une zone tronconique (14), des zones (15) à être arrachées ou percées sont réalisées.

16. Boîte d'installation (1) selon une des revendications 1 à 13, **caractérisée en ce que** la paroi circonférentielle (3) comporte à son extrémité libre au côté de l'embouchure un collier (16) s'étendant vers l'extérieur et formant une arête de bride.

17. Boîte d'installation (1) selon une des revendications 1 à 16, **caractérisée en ce que** la paroi circonférentielle (3) est réalisée de façon élastique au moins sur une partie de sa longueur.

18. Boîte d'installation (1) selon la revendication 17, **caractérisée en ce que** la partie élastique (17) peut être resserrée ou est resserrée et peut être étirée ou est étirée de façon de soufflet.

19. Boîte d'installation (1) selon une des revendications 1 à 18, **caractérisée en ce qu'** à l'intérieur de la paroi circonférentielle (3) de la boîte d'installation (1), des bossages pour vis (18) s'étendant en parallèle à la direction de montage sont disposés.

20. Outil (19) pour le montage et le démontage d'une boîte d'installation (1) selon une ou plusieurs revendications 1 à 19, dans lequel l'outil (19) comporte un corps principal (20) environ en forme d'un cylindre creux avec une poignée (21) à une partie d'extrémité, et dans lequel le diamètre extérieur du corps principal (20) cylindrique est légèrement inférieur au diamètre intérieur de la boîte d'installation (1) formant l'espace d'installation, de façon que le corps principal (20) cylindrique de l'outil (19) puisse être inséré au moyen de la poignée (21) dans l'espace d'installation de la boîte d'installation (1), **caractérisée en ce que** le corps principal (20) cylindrique comporte sur son extérieur des paires opposés de rainures longitudinales (22), à l'intérieur desquelles, dans la position d'utilisation de l'outil (19), des parties de la boîte d'installation (1), c'est-à-dire les bandes de matériau (7) en forme de coin sont disposées, dans un premier paire de rainures longitudinales (22) des moyens d'encliquetage (23) résilients étant disposés qui s'engagent dans des trous d'engagement de l'outil (11) des bandes de matériau (7) en forme de coin, et à un deuxième paire de rainures longitudinales (22) une saillie (24) chacune s'étendant vers l'extérieur de l'extrémité à l'embouchure est réalisée qui dans la position de montage respectivement s'étend sur le front des moyens d'écartement formés par les bandes de matériau (7) en forme de coin, en outre un troisième et un quatrième paire de rainures longitudinales (22) étant prévus, qui forment un espace libre respectif pour les bossages pour vis.
